# EUROPEAN PATENT APPLICATION

(11) **EP 1 717 480 A2**
(43) Date of publication of application: **02.11.2006**
(21) Application number: 06008899.4
(22) Date of filing: 28.04.2006
(51) Int. Cl.: F16F 15/10

(54) **Dampener**

(30) Priority: 29.04.2005 US 676406 P
(71) Applicant: L & L Products, Inc., Romeo, MI 48065 (US)
(72) Inventor: Larsen, Douglas C., Highland, MI 48357 (US); Barz, William J., St. Clair, MI 48079 (US)
(74) Representative: Bawden, Peter Charles

(57) **Abstract**

A dampener (10) is disclosed. The dampener (10) typically includes a carrier (12), an activatable material (14) or both. The activatable material (14) is typically a polymeric material, which, in preferred embodiments, is foamable. The dampener (10) is particularly suitable for application to hollow or tubular members (80) such as vehicle driveshafts.

## Description

### FIELD OF THE INVENTION

The present invention relates generally to a dampening member and more particularly to a dampening member for a driveshaft of an automotive vehicle.

### BACKGROUND OF THE INVENTION

For many years, industry and particularly the transportation industry has been concerned with designing innovative members for providing dampening. As one example, the transportation industry has designed dampeners for driveshafts of automotive vehicle. In the interest of continuing such innovation, the present invention provides an improved dampening member.

It has been found that the dampening member of the present invention can, depending upon the particular embodiment employed, overcome one or several drawbacks of prior dampening members. As one example, the dampening member may be easier to form than prior dampening members. As an additional or alternative example, the dampening member may less costly than prior dampening members. As another additional or alternative example, the dampening member may be able to provide more effective dampening than prior dampening members.

### SUMMARY OF THE INVENTION

Accordingly, the present invention provides a dampener. The dampener typically includes a carrier member and an activatable material disposed thereon. The activatable material can be activated to melt, flow, expand (e.g., foam), cure, adhere or any combination thereof upon exposure to a condition such as heat or upon exposure to chemicals. The dampener is useful for application to structures that include an opening (e.g., a cavity, tunnel or through-hole). The dampener is particularly used for application to a driveshaft of transportation vehicles. While such driveshaft may be formed of various materials, in a preferred embodiment, the driveshaft is formed of material that includes a portion of aluminum or is formed substantially entirely of aluminum.

### BRIEF DESCRIPTION OF THE DRAWINGS

The features and inventive aspects of the present invention will become more apparent upon reading the following detailed description, claims, and drawings, of which the following is a brief description:
Fig. 1 is a perspective view of an exemplary member in accordance with an aspect of the present invention.
Fig. 2 is a perspective view of another exemplary member in accordance with an aspect of the present invention.
Fig. 2A is magnified view of a portion of the exemplary member of Fig. 2.
Fig. 3 is a schematic perspective view of an exemplary assembly according to another aspect of the present invention.

### DETAILED DESCRIPTION OF THE PREFERRED EMBODIMENT

The present invention is predicated upon the provision of a member suitable for providing dampening to one or more structures of an article of manufacture. While the member has been found to be particularly adept at providing dampening, it is additionally contemplated that the member may provide sealing, baffling, reinforcement or a combination thereof to the one or more structures of the article of manufacture. Together, the one or more structures and the member form a system or assembly that is generally desirable for the article of manufacture because of the functional attributes (e.g., noise reduction, vibration dampening, sealing, strength, combinations thereof or the like) provided by the member. It is contemplated that the member may be employed in conjunction with a variety of structures of various articles of manufacture such as boats, trains, buildings, appliances, homes, furniture or the like. It has been found, however, that the member is particularly suitable for application to structures or assemblies of transportation vehicles such as automotive vehicles. Generally, it is contemplated that the member may be applied to various structures such as components of a body, a frame, an engine, a hood, a trunk, a bumper, combinations thereof or the like of an automotive vehicle. According to one particularly preferred embodiment, the member is applied to a driveshaft of an automotive vehicle.

The member typically includes one or more of the following:
a carrier member, which typically has an outer surface that is configured to mirror and/or oppose an internal surface of a structure;
an activatable material disposed upon the outer surface of the carrier member.

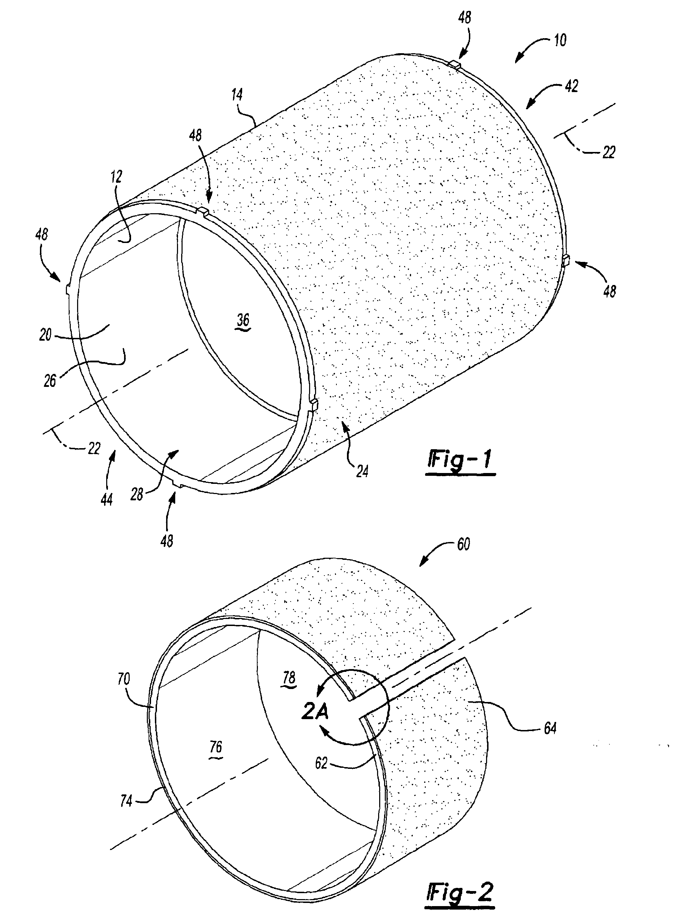

Referring to Fig. 1, there is illustrated one exemplary member 10 according to the present invention for providing dampening, sealing, baffling, reinforcement, combinations thereof or the like to one or more structures of an article of manufacture and particularly to structures of an automotive vehicle. The member 10 includes a carrier member 12 and a mass 14 of activatable material disposed upon the carrier member 12.

In Fig. 1, the carrier member includes a tubular wall 20 disposed about and extending along an axis 22. Generally, the tubular wall 20 can have a variety of cross-sectional shapes depending upon the structure into which the member 10 is to be placed. In the embodiment shown, the wall is cylindrical. The wall 20 includes an outer surface 24 opposite an inner surface 26 and the inner surface 26 defines and internal opening shown as a cylindrical tunnel 28. The surfaces 24, 26 are also shown as cylindrical, but may have a variety of other shapes as needed or desired.

The carrier member 12 also includes an internal baffling wall 36. In the embodiment depicted, the wall 36 is disposed in a plane skew and/or perpendicular to the axis 22.

The carrier member 12 is also illustrated as having thickened portions at opposite ends 42, 44 of the carrier member 12, however, such portions are not required unless otherwise stated. The carrier member 12 further includes a plurality of protrusions 48, which are designed to act as spacers as will be explained further herein. The protrusions 48 are shown as including a plurality (e.g., two, three, four or more) of protrusions 48 distributed about each of the ends 42, 44 of the carrier member 12, but may be otherwise located if needed or desired. Typically, the protrusions 48 extend outwardly away from the outer surface 24 of the carrier member 12.

The carrier member can be formed of a variety of materials. Suitable materials can include for example, and without limitation, metal or a polymeric material (e.g., nylon, polyamide, polyester, polypropylene, polyethylene or others) which may be filled or unfilled (e.g., filled with glass reinforcement fibers), molding compounds, combinations thereof or the like.

The mass 14 of activatable material is shown as a layer extending substantially or completely continuously about the outer surface 24 of the carrier member 12. However, it is contemplated that the mass 14 may include of multiple separate pieces of activatable material, which may be intermittently dispersed or otherwise patterned about the outer surface 24.

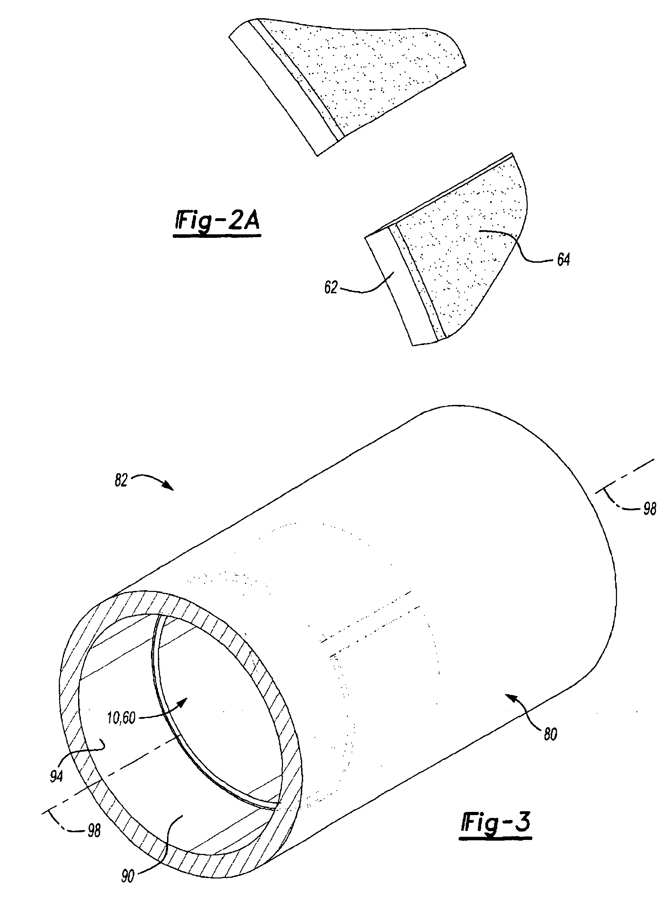

In Fig. 2, there is illustrated another exemplary member 60 according to an aspect of the present invention. The member includes a carrier member 62 and a mass 64 of activatable material connected to or disposed upon the carrier member 62.

In Fig. 2 and 2A, the carrier member 62 is a strip of material that is formed into a tubular wall 70 disposed about and extending along an axis 72. Generally, the tubular wall 70 can have a variety of cross-sectional shapes depending upon the structure into which the member 60 is to be placed. In the embodiment shown, the wall is cylindrical. The wall 70 includes an outer surface 74 opposite an inner surface 76 and the inner surface 76 defines an internal opening shown as a tunnel 78. The surfaces 74, 76 are also shown as cylindrical, but may have a variety of other shapes as needed or desired.

The carrier member can be formed of a variety of materials. Suitable materials can include for example, and without limitation, metal or a polymeric material (e.g., nylon, polyamide, polyester, polypropylene, polyethylene or others) which may be filled or unfilled (e.g., filled with glass reinforcement fibers), molding compounds, combinations thereof or the like. In a preferred embodiment, the carrier member 62 is formed of a relatively flexible material such as polymeric material (e.g., a polyester) or metal (e.g., aluminum) foil material.

The mass 64 of activatable material is shown as a layer extending substantially or completely continuously about the outer surface 74 of the carrier member 12. However, it is contemplated that the mass 64 may include of multiple separate pieces of activatable material, which may be intermittently dispersed or otherwise patterned about the outer surface.

It should be understood that the specific shapes, configurations, materials and other specificities of the members of Figs. 1-6, including the portions, protrusions, the carrier members and the expandable materials, may be varied within the scope of the present invention, unless otherwise specified. The skilled artisan will be able to derive other shapes, configurations and materials for the members of the present invention while still remaining within the scope of the present invention.

A variety of activatable materials may be used for the members of the present invention. Thus, the description herein discusses several potential activatable materials that may be used for any of the members of the present invention.

In one embodiment, the activatable material may be formed of a heat activated material and may flow, cure (e.g., be thermosettable), foam, expand or a combination thereof upon exposure to heat. The activatable material may be generally dry to the touch and substantially non-tacky or may be tacky and, in either situation, may be shaped in any form of desired pattern, placement, or thickness, and may have substantially uniform thickness or variable thickness. Exemplary expandable materials include L-7102 and L-7220 foams available through L&L Products, Inc. of Romeo, Michigan. Another exemplary expandable material is disclosed in U.S. patent application titled "Expandable Material", Serial No. 10/867,835, filed on June 15, 2004 and incorporated herein by reference for all purposes.

Generally, it is also contemplated that the activatable material may be non-expandable or non-foamable, but typically the material is expandable and/or foamable. As used for the present invention, the term activatable material is intended to mean a material that can be activated to cure, expand (e.g., foam), soften, flow or a combination thereof. Thus, it is contemplated for the present invention that an activatable material may be activated to perform only one of aforementioned activities or any combination of the aforementioned activities unless otherwise stated.

Though other heat-activated materials are possible, a preferred heat activated material is an expandable polymer or plastic, and preferably one that is foamable. Particularly preferred materials are foamable or sealing materials, which include or are based upon an epoxy resin, an acrylate or an acetate, an EPDM, combinations thereof or the like, which may be structural, sealing, dampening, baffling, acoustic or a combination thereof. For example, and without limitation, the foam may be an epoxy-based material, including an ethylene copolymer or terpolymer that may possess an alpha-olefin. As a copolymer or terpolymer, the polymer is composed of two or three different monomers, i.e., small molecules with high chemical reactivity that are capable of linking up with similar molecules.

A number of epoxy-based or otherwise based sealing, baffling or acoustic foams are known in the art and may employed in the present invention. A typical foam includes a polymeric base material, such as an epoxy resin, an EVA or ethylene-based polymer which, when compounded with appropriate ingredients (typically a blowing and curing agent), expands and cures in a reliable and predicable manner upon the application of heat or the occurrence of a particular ambient condition. From a chemical standpoint for a thermally-activated material, the foam is usually initially processed as a flowable thermoplastic and/or thermosettable material before curing. It will cross-link (e.g. thermoset) upon curing, which makes the material incapable of further flow.

One advantage of the preferred foamable or activatable materials over prior art materials is that the preferred materials can be processed in several ways. The preferred materials can be processed by injection molding, extrusion, compression molding or with a mini-applicator. This enables the formation and creation of part designs that exceed the capability of most prior art materials.

While preferred materials have been disclosed, other materials may be used as well, particularly materials that are heat-activated or otherwise activated by an ambient condition (e.g. moisture, pressure, time, chemical reaction or the like) and cure in a predictable and reliable manner under appropriate conditions for the selected application. Of course, the material may also be formed of non-activatable materials, non-expandable materials or otherwise. Thus, upon activation, the material may soften, cure and expand; soften and cure only; cure only; soften only; or may be non-activatable.

One example of an expandable material is the epoxy based resin disclosed in U.S. Patent No. 6,131,897, the teachings of which are incorporated herein by reference. Some other possible materials include, but are not limited to, polyolefin materials, copolymers and terpolymers with at least one monomer type an alpha-olefin, phenol/formaldehyde materials, phenoxy materials, and polyurethane materials with high glass transition temperatures. See also, U.S. Patent Nos. 5,766,719; 5,755,486; 5,575,526; and 5,932,680, (incorporated by reference). Polyurethane materials including a blocked isocyanate may also be employed. In general, the desired material will have good adhesion durability properties. Moreover, it is preferable for the material not to generally interfere with the materials systems employed by automobile manufacturers or other manufacturers.

Other exemplary expandable materials can include combinations of two or more of the following: epoxy resin, polystyrene, styrene butadiene-styrene (SBS) block copolymer, butadiene acrylo-nitrile rubber, amorphous silica, glass microspheres, azodicarbonamide, urea, dicyandiamide. Examples of such materials are sold under the tradename SIKAELASTOMER, SIKAREINFORCER and SIKABAFFLE and are commercially available from the Sika Corporation, Madison Heights, MI.

In applications where the material is a heat activated, thermally expanding material, an important consideration involved with the selection and formulation of the material comprising the foam is the temperature at which a material reaction or expansion, and possibly curing, will take place. Typically, the foam becomes reactive at higher processing temperatures, such as those encountered in an automobile assembly plant, when the foam is processed along with the automobile components at elevated temperatures or at higher applied energy levels, e.g., during paint, primer or e-coat baking or curing steps. While temperatures encountered in an automobile assembly operation may be in the range of about 148.89° C to 204.44°C (about 300°F to 400°F), body and paint shop applications are commonly about 93.33°C (about 200°F) or slightly higher. If needed, blowing agent activators can be incorporated into the composition to cause expansion at different temperatures outside the above ranges. Generally, suitable expandable foams have a volumetric range of expansion ranging from approximately 0 to over 1000 percent (e.g., volumetric expansion of greater than 50%, 100%, 200% or 500% of the original unexpanded volume of the material).

The material or medium may be at least partially coated with an active polymer having damping characteristics or other heat activated polymer, (e.g., a formable hot melt adhesive based polymer or an expandable structural foam, examples of which include olefinic polymers, vinyl polymers, thermoplastic rubber-containing polymers, epoxies, urethanes or the like) placed along the mold through the use of baffle technology; a die-cast application according to teachings that are well known in the art; pumpable application systems which could include the use of a baffle and bladder system; and sprayable applications.

### Formation

As discussed, the expandable materials 14, 64 can be processed in a number of different ways. As such, the expandable materials 14, 64 may be applied or connected to the carrier members 12, 62 using a variety of techniques. In one exemplary preferred embodiment, the carrier members 12, 62 are placed as an insert into a mold of an injection molding machine and the expandable materials 14, 64 are insert injection molded into place such that they adhere to the carrier members 12, 62. In another preferred exemplary embodiment, the members 10, 60 are two shot injection molded by injection of a first shot of material to form the carrier members 12, 62 and injection molding a second shot of material to form and/or apply the expandable materials 14, 64 and position the expandable materials 14, 64 relative to the carrier members 12, 62.

In another preferred embodiment, and particularly with respect to the member 60 of Figs. 2 and 2A, it is contemplated that the activatable material may be extruded (e.g., co-extruded or otherwise extruded) as a strip onto a strip of carrier material to form a length of laminate including the carrier material coextensive with the activatable material. Thereafter, the length of laminate material could be cut to form several members, which may be shaped (e.g., by hand curling or rolling or otherwise) to form the member 60 of Figs. 2 and 2A.

### Application

A member according to the present invention may be applied to a variety of locations upon a variety of articles of manufacture. Generally, a member in accordance with the present invention is quite suitable for application to a structure defining an internal cavity or opening. In such a circumstance, the member may be located within the cavity or opening for providing sealing, dampening, baffling or reinforcement to the structure.

The member of the present invention has been found particularly suitable for application to a tubular structure defining an internal tunnel. In such an embodiment, the member can be located within the tunnel of the structure for providing sealing, dampening, baffling or reinforcement to the structure.

The member of the present invention has been found useful for dampening movable structures (i.e., structures that move during use) of articles of manufacture (e.g., automotive vehicles). Thus, for exemplary purposes, Fig 3 illustrates a member of the present invention being applied to a driveshaft, of an automotive vehicle and more typically a main body tubular structure 80 for forming a driveshaft assembly 82. Generally, the tubular structure 80 may be formed of various materials including metal or composite materials. In one preferred embodiment, the tubular structure is formed of steel or extruded aluminum.

In Fig. 3, the member (M) is shown schematically and it should be understood that the member (M) could represent either of the members 10, 60 of Figs. 1-2A or others within the scope of the present invention. However, for purposes of providing greater detail of the application and function of the members of the present invention, application and function of each of the members 10, 60 of the present invention are discussed separately below.

The member 10 of Fig. 1 is typically inserted into an opening 90 (e.g., a tunnel) of the tubular structure 80 of Fig. 3 such that one or any combination of the wall 20, the outer surface 24 and the mass 14 of activatable material oppose an internal surface or wall 94 of the tubular structure 80. Preferably, at least one, a plurality or all of the protrusions 48 contact the surface or wall 94 for assisting in properly locating the member 10 in the opening 90 relative to the tubular structure 80.

The member 60 of Figs. 2-2A is also typically inserted into an opening 90 (e.g., a tunnel) of the tubular structure 80 of Fig. 3 such that one or any combination of the wall 70, the outer surface 74 and the mass 64 of activatable material oppose the internal surface or wall 94 of the tubular structure 80. Generally, the member 60 may pre-shaped to the configuration shown in Figs. 2-2A or the member 60 may need to be rolled, bent or otherwise shaped prior to insertion into the opening 90. Preferably, in such an embodiment, the carrier member 62, the activatable material or both have enough resilience to bias the strip 94 of activatable material into contact with the internal surface 80 of the tubular structure 80 thereby maintaining the member 60 in an annular configuration within the tubular structure 80.

Upon exposure to a condition such as heat (e.g., in an e-coat, primer or paint bake oven), the expandable or activatable materials of the member of the present invention are typically activated to flow, expand (e.g., foam), cure or any combination thereof. Upon curing, the expandable or activatable materials typically adhere to an internal surface of a structure to which the member has been assembled or applied. In this manner, the expandable or activatable materials, alone or in conjunction with the carrier members can assist in providing sealing, dampening, baffling or reinforcement within a structure of an article of manufacture.

In the particular embodiments illustrated, the expandable materials 14, 64 are activated to flow, expand and cure to adhere the material 14, 64 to the internal surface 94 of the tubular structure 80.

For the member 60 of Figs. 2-2A, the activatable material 64, upon activation, typically adheres to the internal surface 94 of the tubular structure 80 and/or the external surface of the carrier member 62. Generally, it is contemplated that the activatable material could expand sufficiently to substantially entirely span a cross-section of the opening 90 of the tubular structure 80. Alternatively, the activatable material could form a material (e.g, foam) ring extending about the internal surface 94 of the tubular structure 80. Advantageously, the activated activatable material (e.g., foam), in conjunction with the carrier member 62 or alone, can assist in dampening or otherwise inhibiting noise, vibrations and/or frequencies that result from typical rotation of the driveshaft and particularly rotation of the tubular structure 80 of the driveshaft about an axis 98.

For the member 10 of Fig. 1, the activatable material 14, upon activation, typically adheres to the internal surface 94 of the tubular structure 80 and/or the external surface of the carrier member 12 thereby locating the carrier member 12 in the tubular structure 80 such that the baffling wall 36 is skew (e.g. perpendicular) to the axis 98 an substantially spans a cross-section of the opening 90 of the tubular structure. Advantageously, the activated activatable material (e.g., foam), in conjunction with the carrier member 12 or alone, can assist in dampening or otherwise inhibiting noise, vibrations and/or frequencies that result from typical rotation of the driveshaft and particularly rotation of the tubular structure 80 of the driveshaft about the axis 98. As an added advantage, the baffling wall 36 divides the opening 90 of the tubular structure 80, which can raise the frequencies of noise and/or vibrations of the structure. In turn, such frequencies are less likely to travel through solid structures.

In addition to the above, it is generally contemplated that any of the dampening members of the present invention can includes one or more attachments for at least temporarily attaching the dampening members to the structures to which they are applied. Exemplary attachments include, without limitation, adhesives, magnets, mechanical fasteners (e.g., push pins, arrowhead fasteners) or the like. These attachments can be integrally formed of the materials of the carrier member and/or activatable material or can be separately attached to the carrier member and/or activatable material.

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

The preferred embodiment of the present invention has been disclosed. A person of ordinary skill in the art would realize however, that certain modifications would come within the teachings of this invention. Therefore, the following claims should be studied to determine the true scope and content of the invention.

## Claims

1. An assembly, the assembly comprising:
a structure defining an internal opening or cavity; and
a member located within the internal opening wherein:
i. the member is configured to dampen undesirable vibrations of the structure during use thereof; and
ii. the member includes an activatable material that foams upon exposure to heat or other condition.

2. An assembly as in claim 1 wherein the structure is tubular and includes an opening extending down a length of the structure.

3. An assembly as in claim 2 wherein the internal opening is a tunnel extending down a length of the tubular structure, the internal opening being substantially enclosed by the tubular structure.

4. An assembly as in claim 1, 2 or 3 wherein the structure is a driveshaft of a transportation vehicle.

5. An assembly as in claim 1, 2, 3 or 4 wherein the structure is formed of a material that includes aluminum.

6. An assembly as in claim 5 wherein the structure is formed of a material that includes extruded aluminum.

7. An assembly as in any of claims 1-6 wherein the member includes a carrier member and the activatable material is disposed upon the carrier member.

8. An assembly as in claim 7 wherein the activatable material is disposed upon an external surface of the carrier member.

9. An assembly as in any of claims 7 or 8 wherein the activatable material is configured to activate to flow, foam and cure thereby adhering to the carrier member and an internal wall of the structure.

10. An assembly as in any of claims 7-9 wherein the carrier member is a flexible film.

11. An assembly as in claim 10 wherein the carrier member is a polymeric material or metal foil and the film and activatable material are a co-extrusion.

12. An assembly as in any of claims 7-9 wherein the carrier member is formed of a molded thermoplastic and has an annular portion upon which the activatable material is disposed.

13. An assembly as in any of claims 7-9 or 12 wherein the carrier member includes a divider within the annular portion that divides the internal opening or cavity thereby raising the frequencies produced by the structure during use.

14. An assembly as in any of claims 13 wherein:
i. the carrier member has a tubular or cylindrical wall disposed about an axis;
ii. the divider in an internal baffling wall that is disposed skew and/or perpendicular to the axis.

15. An assembly as in any of claims 1-14 wherein the carrier member includes standoffs.

16. An assembly as in any of claims 1-15 wherein the structure is formed of an extruded metal.

17. An assembly as in any of claims 1-16 further comprising at least one attachment connecting the carrier member to the at least one tubular structure.
